# EUROPÄISCHE PATENTANMELDUNG

(11) **EP 4 016 814 A1**
(43) Veröffentlichungstag der Anmeldung: **22.06.2022**
(21) Anmeldenummer: 20214804.5
(22) Anmeldetag: 17.12.2020
(51) Int. Cl.: H02K 9/19, H02K 1/20, H02K 3/24

(54) **STATOR, VERFAHREN ZUR HERSTELLUNG, SIMULATION, COMPUTERPROGRAMMPRODUKT**

(71) Anmelder: Flender GmbH, 46395 Bocholt (DE)
(72) Erfinder: Hösle, Markus, 91058 Erlangen (DE)
(74) Vertreter: Michalski Hüttermann & Partner Patentanwälte mbB

(57) **Zusammenfassung**

Die Erfindung betrifft einen Stator (STT) eines elektromechanischen Wandlers, insbesondere einer dynamoelektrischen Maschine, ausgebildet für das Zusammenwirken mit einem Rotor (ROT), umfassend:
- ein Kühlsystem (CLS),
- ein Wicklungssystem (WDS) mit einer Isolierung (ISO),
- einen Kern (CRE), umfassend mindestens einen magnetisch leitfähigen Körper (PMB), wobei der Stator (STT) sich entlang einer Längsachse (RTX) und um diese Längsachse (RTX) entlang einer Umfangsrichtung (CDR) erstreckt, wobei der Kern (CRE) Ausnehmungen (RZS) aufweist, in denen Wicklungsstränge (WWR) des Wicklungssystems (WDS) zumindest teilweise angeordnet ist, wobei das Kühlsystem (CLS) für die Durchströmung mittels eines Kühlmediums (CMD) eingerichtet ist. Damit der Stator gleichmäßig entwärmt wird, schlägt die Erfindung vor, dass das Kühlsystem (CLS) in dem Körper (PMB) angeordnete Kanäle (CHN) aufweist, die derart ausgebildet sind, dass das Kühlmedium (CMD) den Körper (PMB) zumindest abschnittsweise in axialer Richtung durchströmt, wobei das Kühlsystem (CLS) derart ausgebildet ist, dass das Kühlmedium (CMD) auf mindestens zwei parallel zueinander geführte Strömungspfade (PFP) entlang des Kerns (CRE) aufgeteilt wird, wobei der jeweilige parallel geführte Strömungspfad (PFP) mit mindestens einer Blende (THR) versehen ist, die von dem Kühlmedium (CMD), dass den jeweiligen parallel geführten Strömungspfad (PFP) passiert, durchströmt wird, wobei die Blenden (THR) derart ausgebildet sind, dass die Anteiligkeit (SHR) der Aufteilung (SPT) der Kühlmitteldurchströmung auf die Kanäle (CHN) während eines Nennbetriebes im Wesentlichen einer Ziel-Anteiligkeit (TSH) entspricht.

## Beschreibung

Die Erfindung betrifft einen Stator eines elektromechanischen Wandlers, insbesondere einer dynamoelektrischen Maschine, ausgebildet für das Zusammenwirken mit einem Rotor, umfassend: ein Kühlsystem, ein Wicklungssystem mit einer Isolierung und einen Kern, umfassend mindestens einen magnetisch leitfähigen Körper, wobei der Stator sich entlang einer Längsachse und bevorzugt um diese Längsachse entlang einer Umfangsrichtung erstreckt, wobei der Kern Ausnehmungen aufweist, in denen Wicklungsstränge des Wicklungssystems zumindest teilweise angeordnet sind, wobei das Kühlsystem für die Durchströmung mittels eines Kühlmediums eingerichtet ist.

Elektromechanische Wandler sind Elektromotoren oder Generatoren, insbesondere dynamoelektrische Maschinen.

Der Kern eines Stators eines elektromechanischen Wandlers muss aufgrund der Verluste, zum Beispiel Eisenverluste, Leiterverluste usw., gekühlt werden. Für eine effiziente Entwärmung reicht meist eine Luftkühlung nicht mehr aus, so dass eine Flüssigkeitskühlung, insbesondere Wasserkühlung oder Ölkühlung, vorgesehen wird. In dem Kern sind in der Regel dafür Kühlkanäle des Kühlsystems in dem magnetisch leitfähigen Körper der z.B. dynamoelektrischen Maschine, vorgesehen.

Die DE 24 62 150 oder die EP 0 684 682 B1 zeigen elektromechanische Wandler mit entsprechenden Kühlkanälen in einem Blechschnitt des Kerns.

Herkömmliche Statoren weisen im Betrieb häufig eine nicht einheitliche Entwärmung auf. Dieses Phänomen ist oft dadurch verursacht, dass sich bei der Durchströmung des Kühlsystems mit dem Kühlmedium Strähnen unterschiedlicher Temperaturen ausprägen und dass die Durchströmung des Kühlsystems derart ungleichmäßig erfolgt, dass größere Mengen des Kühlmediums durch bestimmte Regionen des Kühlsystems strömen und in anderen Regionen des Kühlsystems mit weniger Durchströmung sich dadurch vergleichsweise höhere Temperaturen ausbilden. Diese Ungleichmäßigkeit im Kühlsystem überträgt sich als ungleichmäßige Temperaturverteilung auf den Kern, sodass Werkstoffeigenschaften in manchen Regionen des Kerns früher ausgeschöpft sind infolge der höheren thermischen Belastung, als in anderen Regionen. Daneben kommt es an unterschiedlichen Stellen des Kerns häufig auch zu verschiedener Wärmeleistung, sodass der Kern in der Regel keine im Wesentlichen einheitliche Temperatur aufweist.

Ausgehend von den Problemen und Nachteilen des Standes der Technik hat es sich die Erfindung zur Aufgabe gemacht, die Entwärmung des Kerns zu verbessern.

Zur Lösung der Aufgabe, schlägt die Erfindung einen Stator eingangs definierter Art mit den zusätzlichen Merkmalen des Kennzeichens des unabhängigen Anspruchs vor. Im Einzelnen ist vorgesehen, dass das Kühlsystem in dem Körper angeordnete Kanäle aufweist, die derart ausgebildet sind, dass das Kühlmedium den Körper zumindest abschnittsweise in axialer Richtung durchströmt, wobei das Kühlsystem derart ausgebildet ist, dass das Kühlmedium auf mindestens zwei parallel zueinander geführte Strömungspfade entlang des Kerns aufgeteilt wird, wobei der jeweilige parallel geführte Strömungspfad mit mindestens einer Blende versehen ist, die von dem Kühlmedium, das den jeweiligen parallel geführten Strömungspfad passiert, durchströmt wird. Bevorzugt sind die Blenden derart ausgebildet, dass die Anteiligkeit der Aufteilung der Kühlmitteldurchströmung auf die Kanäle während eines Nennbetriebes im Wesentlichen einer Ziel-Anteiligkeit entspricht. Diese Zielanteiligkeit kann, zum Beispiel mittels Simulation, derart bestimmt sein, dass sich eine einheitliche Temperaturverteilung, zumindest eine möglichst gute Annäherung an eine einheitliche Temperaturverteilung ergibt.

Sofern nicht anders angegeben, beziehen sich vorliegend Begriffe, wie radial, tangential, axial oder Umfangsrichtung auf eine Längsachse des Stators.

Eine vorteilhafte Weiterbildung sieht vor, dass das Kühlsystem eine Zusammenführung von parallel zueinander geführten Strömungspfaden, insbesondere aller parallel zueinander geführten Strömungspfade, stromabwärts der jeweiligen Aufteilung vorsieht. Die Aufteilungen und Zusammenführungen können jeweils kaskadiert ausgebildet sein. Die Parallelführung von Strömungspfaden ermöglicht eine zielgenauere Kühlung der einzelnen wärmeproduzierenden Komponenten. Grundsätzlich versteht die Erfindung unter dem in diesem Zusammenhang benutzten Begriff "parallel" nicht die geometrische parallele Anordnung, sondern lediglich eine Aufteilung von einer zunächst gemeinsamen Strömung in zwei Strömungspfade und eine anschließende Wiedervereinigung bzw. Zusammenführung. Diese Aufteilung und Wiedervereinigung bzw. die Parallelführung kann hierbei derart erfolgen, sodass ein aus einer Aufteilung resultierender Strömungspfad nochmals geteilt wird und stromabwärts entweder alle zugleich zusammengeführt werden oder nacheinander. Ein bevorzugtes Ausführungsbeispiel sieht vor, dass der Kern mehrere Körper aufweist und das Kühlsystem vorsieht, dass eine Aufteilung der Strömung des Kühlmediums auf die einzelnen Körper erfolgt und anschließend diese Aufteilung wiedervereinigt wird. In den Körpern selbst kann eine weitere Aufteilung der Strömungsführung erfolgen.

Im Einzelnen kann der Kern mehrere voneinander getrennte Körper, zum Beispiel mindestens zwei axial nebeneinander angeordnete Körper aufweisen, einen ersten Körper und einen zweiten Körper. Hierbei kann zweckmäßig der erste Körper um einen Axialspalt beabstandet von dem zweiten Körper angeordnet sein. Grundsätzlich können die Blenden, die die Durchströmung durch die einzelnen parallel geführten Strömungspfade konfigurieren sollen, an verschiedenen Stellen der parallelen Führungen angeordnet sein. Besonders zweckmäßig ist eine Anordnung der Blenden im Bereich des Austritts aus der Parallelführung hinein in eine Zusammenführung. Bei einer Konstellation mit einem Axialspalt zwischen zwei Körpern ist es sinnvoll, wenn an dem Axialspalt oder in dem Axialspalt die Blenden derart angeordnet sind, dass das Kühlmedium durch die Blenden in dem Axialspalt aus verschiedenen parallel geführten Strömungspfaden zusammengeführt wird.

Bevorzugt sind der Körper oder die Körper des Kerns als Blechpakete ausgebildet.

Wenn die beiden Körper mittels eines Axialspalts voneinander getrennt angeordnet sind, kann es zweckmäßig sein, dass Abstandhalter zwischen den Körpern vorgesehen sind, die eine axiale Annäherung der Körper verhindern. Hierbei können mindestens einige der Blenden jeweils als Öffnungen in den Abstandhaltern zwischen den Körpern vorgesehen sein. Besonders sinnvoll ist es, wenn zumindest einige der in dem Körper angeordneten Kanäle zunächst in eine Kavität der Abstandhalter stromaufwärts der Blenden münden bevor eine Durchströmung der Blenden erfolgt.
Eine gute Kombination von einer Kühlung des Wicklungssystems und der Kühlung der Körper des Kerns ergibt sich, wenn zumindest einige sich axial durch den Kern erstreckende Wicklungsstränge gemeinsam mit angrenzenden Oberflächen der jeweiligen Ausnehmungen in den Körpern die parallel durchströmten Kanäle des Kühlsystems in dem Körper definieren, so dass das Kühlmedium an dem jeweiligen Wicklungsstrang entlang strömt. Hierbei kann das Wicklungssystem zwischen einem Leiter des Wicklungssystems und einer Wandung der Ausnehmung, in der ein Wicklungsstrang angeordnet ist, eine Isolierung bzw. Hauptisolierung aufweisen. Zwischen der Hauptisolierung und der Wandung kann zweckmäßig ein Kühlkanal bzw. Kanal des Kühlsystems vorgesehen sein. Hierbei ist es sinnvoll, wenn die Hauptisolierung und/oder das Wicklungssystem selbst bzw. ein Wicklungsstrang eine den Kanal zumindest teilweise bildende Vertiefung in Längsrichtung des Kanals aufweist, wobei die Ausbuchtung als eine Prägung in der Isolierung und/oder dem Leitermaterial ausgebildet sein kann.

Bevorzugt ist der jeweilige Wicklungsstrang als Teil einer Formspule ausgebildet und entweder derart gewickelt, dass sich eine Grundform ergibt, die bereits Anteile eines Kühlkanals aufweist. Alternativ dazu und besonders bevorzugt wird zunächst der Wicklungsstrang als Teil einer Formspule ohne Ausbildung eines Kühlkanals hergestellt und anschließend mit einer Isolierung bzw. Hauptisolierung versehen, die mindestens eine Einprägung aufweist, sodass die Einprägung gemeinsam mit einer Nutwandung oder Ausnehmungswandung des jeweiligen Körpers einen Kühlkanal-Abschnitt ergibt. Der Wicklungsstrang kann beispielsweise aus Leiterstäben und/oder Windungen und/oder elektrisch parallel geschalteten Teilleitern bestehen.

Besonders zweckmäßig weist der Stator in dem Bereich, der im betriebsfertigen Zustand an einen Rotor grenzt, ein Spaltrohr auf, das den Stator von dem Rotor - bevorzugt hermetisch - trennt, sodass das Kühlsystem des Stators unabhängig von dem Rotor betrieben werden kann bzw. das Kühlsystem des Stators gegenüber dem Rotor geschlossen ist.

Bei einer Aufspaltung des Kerns in mindestens zwei axial voneinander beabstandete Körper ist es zweckmäßig, wenn die Wicklungsstränge sich axial durch den Kern - den Axialspalt überbrückend - erstrecken.
Der Axialspalt kann zweckmäßig durch Abstandhalter gewährleistet werden, wobei der jeweilige Abstandhalter ringförmig ausgebildet sein kann und jeweils im Bereich des Axialspaltes einen Wicklungsstrang umgeben kann.

Eine vorteilhafte Weiterbildung der Erfindung sieht vor, dass axial neben dem Kern auf einer ersten Seite ein erster Sammelraum stromaufwärts des Kerns für das Kühlmedium vorgesehen ist. Alternativ oder zusätzlich kann axial neben dem Kern auf einer zweiten Seite ein zweiter Sammelraum stromaufwärts des Kerns für das Kühlmedium vorgesehen sein. Bei der Variante mit zwei Sammelräumen ist eine Aufspaltung bzw. Aufteilung der Kühlmediumströme in dem Kühlsystem vor den beiden Sammelräumen zweckmäßig. In anderen Worten: das Kühlsystem weist eine zweiflutige Ausführung auf, wobei die beiden Strömungspfade der zwei Fluten jeweils einen Sammelraum aufweisen, von dem jeweils besonders bevorzugt eine Aufteilung in zueinander parallele Strömungsführungen des Kühlmediums bevorzugt durch jeweils einen anderen Körper des Kerns erfolgt.

Besonders bevorzugt ist mindestens einer der beiden Sammelräume - bevorzugt sind beide Sammelräume als ringförmige Sammelräume ausgebildet, wobei sich diese Ringform bevorzugt um die Längsachse entlang der Umfangsrichtung erstreckt.

Eine vorteilhafte Weiterbildung der Erfindung sieht vor, dass das Wicklungssystem Wickelköpfe aufweist, wobei mindestens ein Wickelkopf in einem Sammelraum zumindest teilweise angeordnet ist, wobei zwischen der Zuströmung und dem Wickelkopf eine Trennwand in dem Sammelraum angeordnet ist, wobei die Trennwand bevorzugt mehrere Durchströmungsöffnungen aufweist. Hierbei sind bevorzugt die Durchströmungsöffnungen an unterschiedlichen Umfangspositionen und/oder Radialpositionen vorgesehen, und/oder die Durchströmungsöffnungen können zumindest teilweise unterschiedlich groß sein und/oder unterschiedlich beabstandet angeordnet sein können, und/oder die Durchströmungsöffnungen sind bevorzugt derart ausgebildet, dass die Umfangsverteilung der Kühlmittel-Durchströmung auf die Durchströmungsöffnungen während des Nennbetriebes im Wesentlichen einer Ziel-Umfangsverteilung entspricht. Die Durchströmungsöffnungen in der Trennwand sind in der Terminologie der Erfindung synonym mit den Blenden und erfüllen die gleiche Funktion der Vergleichmäßigung der Durchströmung oder die Anpassung an eine Ziel-Anteiligkeit oder Ziel-Umfangsverteilung des Kühlmediums. Vorteilhafte Weiterbildungen der Erfindung sehen daher vor, dass die Blenden nach der Erfindung ausschließlich als die Öffnungen in der Trennwand eines Sammelraums oder den Trennwänden der Sammelräume ausgebildet sind oder ausschließlich als Blenden in dem Axialspalt zwischen den Körpern oder als eine Kombination aus beiden Blenden-Typen.

Eine vorteilhafte Weiterbildung der Erfindung sieht vor, dass das Kühlsystem derart ausgebildet ist, dass stromaufwärts der Sammelräume eine erste Aufteilung in mindestens zwei parallel zueinander geführte Strömungspfade vorgesehen ist und die Sammelräume sich in den parallel geführten Strömungspfaden befinden.

Insbesondere, wenn ein hochwertiges Kühlmedium benutzt wird, ist es zweckmäßig, wenn das Kühlmedium entlang eines geschlossenen Kreislaufs geführt wird. Bevorzugt gibt es einen primären Kreislauf des Kühlsystems, der geschlossen ausgebildet ist, dieser kann mittels eines Wärmetauschers von einer anderen Wärmesenke gekühlt werden, z.B. mittels einer Luftkühlung (sekundäre Kühlung).

Die Erfindung löst die Aufgabe auch mittels eines Verfahrens zur Herstellung eines Stators nach der vorhergehenden Beschreibung, umfassend die folgenden Schritte:
a) Erzeugung eines Entwurfs des Stators umfassend das Kühlsystem mit Parametern, die die Durchströmung des Kühlsystems mit dem Kühlmedium beeinflussen,
b) Festlegung der Ziel-Anteiligkeit der Aufteilung der Kühlmitteldurchströmung auf parallel durchströmte Kanäle durch den Kern während des Nennbetriebes,
c) Bestimmen der Blenden-Öffnungen derart, dass die Anteiligkeit der Aufteilung der Kühlmitteldurchströmung auf die Kanäle während des Nennbetriebes im Wesentlichen der Ziel-Anteiligkeit entspricht,
d) Fertigung des Stators umfassend Blenden, die die ermittelten Blenden-Öffnungen aufweisen.

Derartige elektromechanische Wandler werden häufig bei Windkraftanlagen in der Bauform eines Generators eingesetzt, da sie bei kompakter Bauweise eine hohe Leistungsdichte aufweisen.

Ein bevorzugtes Anwendungsfeld der Erfindung sind Generatoren, insbesondere von Windkraftanlagen, sodass sich die Erfindung auch auf Generatoren oder auf Generatoren von Windkraftanlagen oder auf eine Windkraftanlage mit einem Generator umfassend einen Stator nach der Erfindung bezieht. Ein anderes Anwendungsgebiet der Erfindung sind Asynchronmaschinen, insbesondere Käfigläufermotoren.

Hierbei oder außerdem kann ein computerimplementiertes Verfahren zur Simulation des Betriebs eines Stators gemäß der Erfindung oder des vorgenannten Verfahrens benutzt werden. Insbesondere ist es zweckmäßig, wenn der im Rahmen des zuvor beschriebenen Verfahrens erzeugte Entwurf eines Stators bzw. einer entsprechenden Gesamtmaschine (elektromechanischer Wandler) mittels des computerimplementierten Verfahrens simuliert wird. Auf diese Weise ist es möglich, die bestmögliche Konfiguration der Blenden herauszufinden unter Berücksichtigung der sich während der Simulation unter verschiedenen Betriebsbedingungen ergebenden Temperaturverteilung im Kern. Darüber hinaus ist die Möglichkeit der Simulation auch wertvoll, betriebsbegleitend Aussagen über die Temperaturverteilung und mögliche Grenzwertüberschreitungen bzw. Materialbeschädigungen machen zu können und gegebenenfalls zu entscheiden, welches Betriebsszenario tatsächlich umgesetzt werden soll. Diese Simulation kann betriebsbegleitend unterstützen, Wartungsintervalle festzulegen, Lebensdauervorhersagen zu machen und Ersatzteile vorzusehen. In diesem Zusammenhang wird gegenwärtig auch häufig von einem digitalen Zwilling gesprochen.

Dementsprechend bezieht sich die Erfindung auch auf ein Computerprogrammprodukt zur Durchführung eines Verfahrens zur Simulation mittels mindestens eines Computers.

Eine vorteilhafte Ausgestaltung der Erfindung ist in der Folge anhand eines prinzipiell dargestellten Ausführungsbeispiels näher erläutert. Es zeigen:
- Figur 1: eine schematische Darstellung eines elektromechanischen Wandlers in einem Längsschnitt,
- Figur 2: den Schnitt II-II ausgewiesen in Figur 1,
- Figur 3: perspektivisch schematische Detailansicht von Wicklungssträngen in Nuten des Körpers,
- Figur 4: perspektivisch schematische Detailansicht eines Abstandhalters um einen Wicklungsstrang,
- Figur 5: Flussdiagramm eines Verfahrens nach der Erfindung,
- Figur 6: eine schematische Darstellung einer auf einem Computer ablaufenden Simulation einer Anordnung/eines Verfahrens nach der Erfindung, Computerprogrammprodukt.

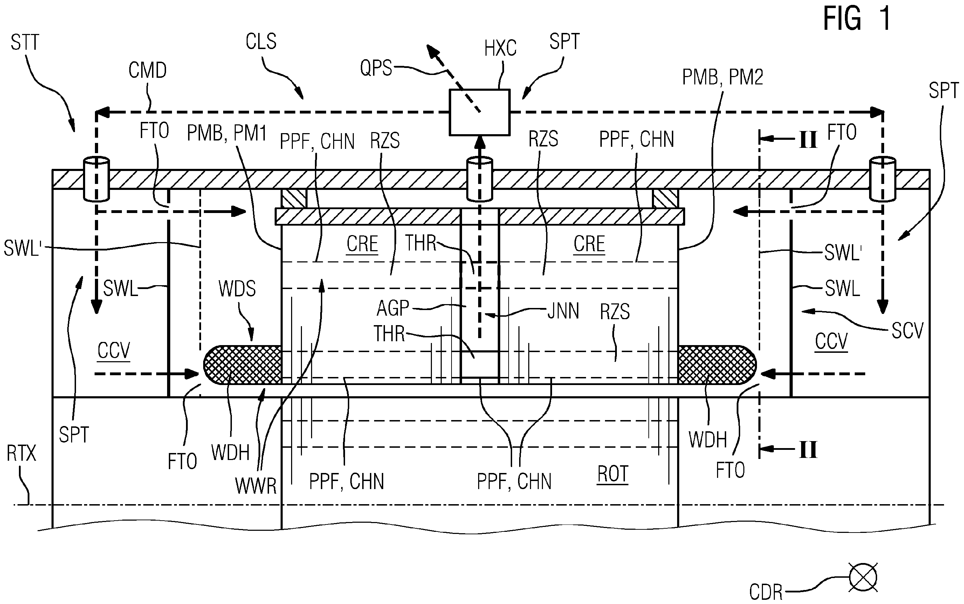

Figur 1 zeigt in einer schematischen Längsschnittdarstellung einen als dynamoelektrische Maschine ausgeführten elektromechanischen Wandler - hier einen Generator - wobei der Schwerpunkt der Darstellung auf einem Stator STT liegt, der im Wesentlichen zylindrisch in Umfangsrichtung CDR und entlang einer Längsrichtung einer Längsachse RTX einen Rotor ROT umgibt.

Der um die Längsachse RTX rotierbar gelagerte Rotor ROT ist in der Darstellung nur angedeutet. Der für das Zusammenwirken mit dem Rotor ROT ausgebildete Stator STT umfasst ein Kühlsystem CLS, ein Wicklungsystem WDS und einen Kern CRE.

Das Kühlsystem CLS wird von einem Kühlmedium CMD durchströmt. Das Kühlsystem CLS erstreckt sich hierbei ausgehend von einem Wärmetauscher HXC zunächst von einer ersten Aufteilung SPT des Kühlmediums CMD ausgehend zweiflutig zu jeweils einem axialen Ende des Stators STT, wo das Kühlmedium CMD an den axialen Enden des Stators STT in einen Sammelraum CCV eintritt. Die beiden Körper PMB des Kerns CRE weisen in Längsrichtung angeordnete Kanäle CHN entlang der Wicklungsstränge WWR auf. Das Kühlmedium CMD durchströmt dementsprechend die Körper PMB zumindest abschnittsweise in axialer Richtung. Stromabwärts der Durchströmung der beiden Körper PMB werden die beiden parallel geführten Strömungspfade PFP wieder zusammengeführt.

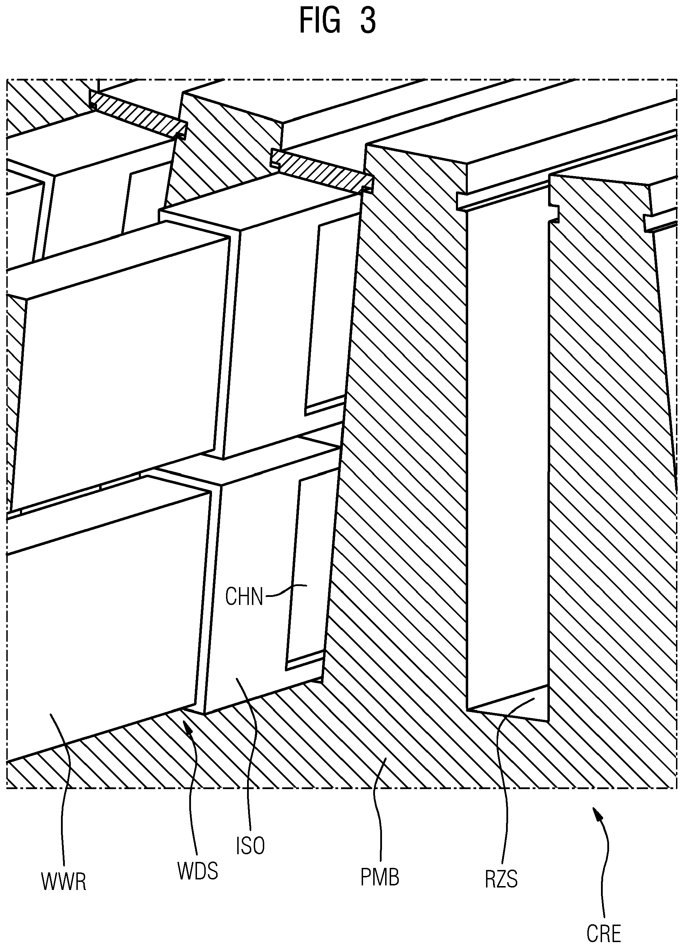

Das Wicklungsystem WDS umfasst eine Isolierung ISO. Der Kern CRE umfasst zwei magnetisch leitfähige Körper PMB, einen ersten Körper PM1 und einen zweiten Körper PM2, die axial voneinander beanstandet sind. Zwischen den beiden Körpern PM1, PM2 befindet sich ein Axialspalt AGP. Wicklungsstränge WWR des Wicklungsystem WDS sind zumindest teilweise in Ausnehmungen RZS des Kerns CRE angeordnet (näheres ist hierzu auch der Figur 3 entnehmbar). Die Wicklungsstränge WWR erstrecken sich durch die Körper PMB des Kerns CRE - den Axialspalt AGP überbrückend.

Die Zusammenführung der parallelen Strömungspfade PFP des Kühlmediums CMD erfolgt in dem Axialspalt AGP, wobei stromabwärts des Axialspalts AGP das Kühlmedium CMD wieder dem Wärmetauscher HXC zugeführt wird. Der Wärmetauscher HXC führt die Verlustleistung QPS einer nicht dargestellten Wärmesenke zu. Diese kann zum Beispiel eine sekundäre Luftkühlung sein. Daneben umfasst der Wärmetauscher HXC auch geeignete Mittel, das Kühlmedium CMD in einem geschlossenen Kreislauf zu befördern (in der Regel wird hier eine Pumpe eingesetzt, da das Kühlmedium CMD bei den anstehenden zu entwärmenden Leistungen in der flüssigen Phase eingesetzt ist) - es sei denn, es ist ein ausreichender Naturumlauf gewährleistet.

Die Vereinigung aller parallel geführten Strömungspfade PSP in dem Axialspalt AGP erfolgt über Blenden THR, die derart ausgebildet sind, dass die Anteiligkeit SHR der Aufteilung SPT der Kühlmitteldurchströmung auf die Kanäle CHN während eines Nennbetriebes im Wesentlichen einer Ziel-Anteiligkeit TSH entspricht.

Die Blenden THR sind hierbei als Abstandhalter DSE zwischen den Körpern PMB ausgebildet, die eine axiale Annäherung der Körper PMB verhindern. Hierbei sind die Blenden THR jeweils als Öffnungen in den Abstandhaltern DSE zwischen den Körpern PMB vorgesehen sind, wobei die Kanäle CHN in den Körpern PMB in eine Kavität CVT der Abstandhalter DSE stromaufwärts der Blenden THR münden. Das Kühlmedium CMD kühlt sowohl die Körper PMB als auch die einzelnen Wicklungsstränge WWR dadurch, dass die axial durch den Kern CRE sich erstreckenden Wicklungsstränge WWR gemeinsam mit angrenzenden Oberflächen der jeweiligen Ausnehmungen RZS in den Körpern PMB die parallel durchströmten Kanäle CHN des Kühlsystems in dem Körpern PMB definieren, so dass das Kühlmedium CMD an dem jeweiligen Wicklungsstrang WWR und entlang der Körper PMB strömt.

In den von dem Kühlsystem CLS ausgehend betrachtet stromaufwärts der jeweiligen Durchströmung der Körper PMB angeordneten Sammelräumen CCV findet nach der ersten in dem Beispiel in dem Wärmetauscher HXC vorgesehenen Aufteilung eine zweite Aufteilung SPT des Kühlmediums CMD in parallele Strömungspfade durch die jeweiligen Körper PM1, PM2 statt. Dementsprechend ist die Aufteilung in parallele Strömungspfade PFP quasi kaskadiert, sodass sich nach einer ersten Aufteilung SPT die Sammelräume CCV in parallel geführten Strömungspfaden CSP befinden und in den Sammelräumen CCV eine zweite Aufteilung SPT in parallel zu einander geführte Strömungspfade PFP entlang der Kanäle CHN in den Körper PMB erfolgt.

In den Sammelräumen CCV sind Wickelköpfe WDH des Wicklungssystems WDS angeordnet, wobei zwischen einer Zuströmung INL und dem Wickelkopf WDH eine Trennwand SWL in dem jeweiligen Sammelraum CCV vorgesehen ist, wobei die Trennwand SWL mehrere Durchströmungsöffnungen FTO an unterschiedlichen Umfangspositionen aufweist. Die Durchströmungsöffnungen FTO sind zumindest teilweise unterschiedlich groß (die Größenunterschiede sind in der schematischen Darstellung nicht wiedergegeben), sodass die Umfangsverteilung der Kühlmittel-Durchströmung auf die Durchströmungsöffnungen FTO während des Nennbetriebes im Wesentlichen einer Ziel- Umfangsverteilung TCD entspricht. Für die Trennwand SWL sind unterschiedliche Axialpositionen möglich, wie es in Figur 1 - als Alternativausführung - ausgewiesen ist. Eine axial weiter außen befindliche Position der Trennwand SWL weist darüber hinaus beispielhaft ein radial weiter außen angeordnete Durchströmungsöffnungen FTO auf im Verhältnis zu einer axial weiter innen (die axial weiter innen befindlichen Positionen sind näher an den Körpern PMB angeordnet) befindlichen alternativen Position der Trennwand SWL', die radial weiter innen befindliche Durchströmungsöffnungen FTO aufweist. Besonders zweckmäßig sind die Durchströmungsöffnungen FTO einerseits abgestimmt auf die Positionen der Wicklungsköpfe WHD und andererseits abgestimmt sowohl auf die Blenden THR als auch auf die Anordnung der Zuströmung INL in dem jeweiligen Sammelraum CCV, derart, dass sich keine großen Temperaturdifferenzen während des Betriebs in dem Kern CRE bzw. den Körpern PMB und den Wicklungsystem WDS bilden. Das Ziel ist eine einheitliche effiziente Entwärmung. Besonders zweckmäßig ist die Position der Durchströmungsöffnungen FTO jeweils auf die Position der Wickelköpfe WDH in den Sammelräumen CCV abgestimmt, sodass das Kühlmedium durch die Durchströmungsöffnungen FTO direkt zu den Wickelköpfen WDH strömt. Auf diese Weise wird der Wärmeübergang zwischen dem Kühlmedium CMD und den Wickelköpfen WDH befördert.

Grundsätzlich ist auch eine Umkehrung der Druchströmungsrichtung möglich, so dass das Kühlmedium zuerst in den Axialspalt AGP einströmt und stromabwärts die Sammelräume CCV an den axialen Enden erreicht.

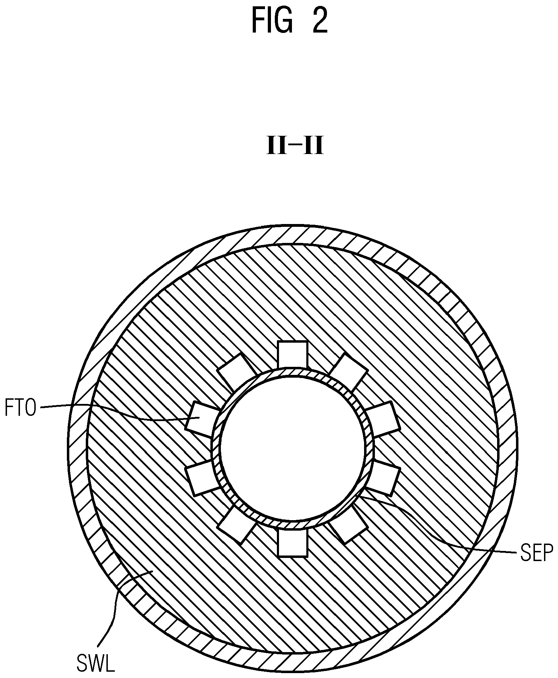

Figur 2 zeigt eine Trennwand SWL beispielhaft in der Ansicht eines in Figur 1 ausgewiesenen Schnitts II-II. Die Durchströmungsöffnungen FTO in der Trennwand SWL befinden sich hierbei direkt benachbart zu dem Spaltrohr SEP.

Die Figur 3 zeigt eine perspektivisch schematische Detailansicht von Wicklungssträngen WWR angeordnet in als Nuten ausgebildeten Ausnehmungen RZS des Körpers PMB. Die Wicklungsstränge WWR sind mit einer Isolierung ISO versehen, wobei im Wesentlichen parallel zueinander verlaufende Kanäle CHN zur Durchströmung mittels des Kühlmediums CMD des Kühlsystems CRS als Einprägungen in der Isolierung ISO vorgesehen sind. Auf diese Weise verlaufen die Kanäle CHN in axialer Längsrichtung entlang der Wicklungsstränge WWR und entlang einer Oberflächen der Körper PMB, sodass eine einheitliche Entwärmung des Kerns CRE unter Anwendung der erfindungsgemäßen Ziel-Anteiligkeit gewährleistet ist.

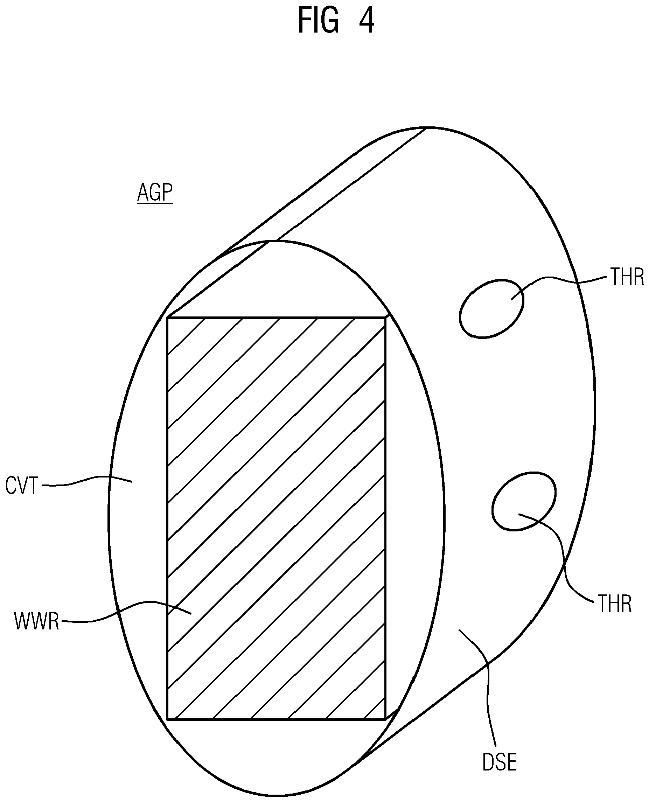

Die Figur 4 zeigt eine perspektivisch schematische Detailansicht von mit Blenden THR versehenen Abstandhaltern DSE, die jeweils ringförmig um einzelne Wicklungsstränge WWR in dem Axialspalt AGP angeordnet sind. Die in dem Körper PMB angeordneten Kanäle CHN münden hierbei jeweils in eine von der Ringform der Abstandhalter DSE und der angrenzenden Körperwandungen begrenzte Kavität stromaufwärts der Blenden THR. Dementsprechend weisen die Abstandhalter DSE eine Doppelfunktion auf; sie beeinflussen die Anteiligkeit der Durchströmung der parallel geführten Kanäle CHN durch die jeweiligen Körper PMB und halten die Körper PMB zueinander auf einem bestimmten Axialabstand.

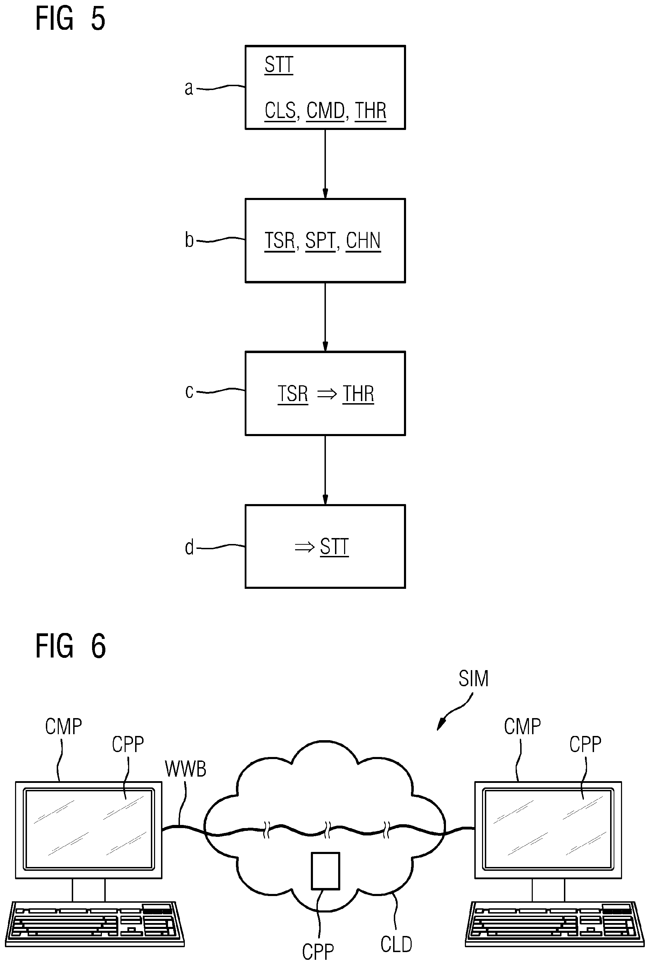

Figur 5 zeigt ein Flussdiagramm eines Verfahren zur Herstellung eines Stators STT umfassend die folgenden Schritte:
a) Erzeugung eines Entwurfs des Stators STT umfassend das Kühlsystem CLS mit Parametern, die die Durchströmung des Kühlsystems CLS mit dem Kühlmedium CMD beeinflussen,
b) Festlegung der Ziel-Anteiligkeit TSR der Aufteilung SPT der Kühlmitteldurchströmung auf parallel durchströmte Kanäle CHN durch den Kern CRE während des Nennbetriebes,
c) Bestimmen der Blenden-Öffnungen derart, dass die Anteiligkeit der Aufteilung SPT der Kühlmitteldurchströmung auf die Kanäle CHN während des Nennbetriebes im Wesentlichen der Ziel-Anteiligkeit TSR entspricht,
d) Fertigung des Stators STT umfassend Blenden THR, die die ermittelten Blenden-Öffnungen aufweisen.

Figur 6 zeigt eine schematische Darstellung einer auf einem Computer CMP - hier auf mehreren Computern CMP eines Netzwerks WWB umfassend eine Cloud CLD - ablaufenden Simulation SIM einer Anordnung/eines Verfahrens nach der Erfindung. Die auf den Computern CMP installierte Software ist ein Computer-programmprodukt CPP, das bei Ausführung auf mindestens einem Computer CMP dem Benutzer mittels Schnittstellen Bildschirm, Tastatur eine Einflussnahme bzw. Konfiguration und einen Erkenntnisgewinn auf Basis der ausgeführten Simulation SIM ermöglicht, sodass insbesondere technische Gestaltungsentscheidungen mittels der Simulation unterstützt und verifiziert werden können.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

**1.** Stator (STT) eines elektromechanischen Wandlers, insbesondere einer dynamoelektrischen Maschine, ausgebildet für das Zusammenwirken mit einem Rotor (ROT), umfassend
- ein Kühlsystem (CLS),
- ein Wicklungssystem (WDS),
- einen Kern (CRE), umfassend mindestens einen magnetisch leitfähigen Körper (PMB),
wobei der Stator (STT) sich entlang einer Längsachse (RTX) erstreckt,
wobei der Kern (CRE) Ausnehmungen (RZS) aufweist, in denen Wicklungsstränge (WWR) des Wicklungssystems (WDS) zumindest teilweise angeordnet sind,
wobei das Kühlsystem (CLS) für die Durchströmung mittels eines Kühlmediums (CMD) eingerichtet ist,
**dadurch gekennzeichnet, dass**
das Kühlsystem (CLS) in dem Körper (PMB) angeordnete Kanäle (CHN) aufweist, die derart ausgebildet sind, dass das Kühlmedium (CMD) den Körper (PMB) zumindest abschnittsweise in axialer Richtung durchströmt,
wobei das Kühlsystem (CLS) derart ausgebildet ist, dass das Kühlmedium (CMD) auf mindestens zwei parallel zueinander geführte Strömungspfade (PFP) entlang des Kerns (CRE) aufgeteilt wird,
wobei mindestens einer der parallel geführten Strömungspfade (PFP) mit mindestens einer Blende (THR) versehen ist, die von dem Kühlmedium (CMD), das den jeweiligen parallel geführten Strömungspfad (PFP) passiert, durchströmt wird.

**2.** Stator (STT) nach Anspruch 1, wobei das Kühlsystem (CLS) eine Zusammenführung (JNN) von parallel zueinander geführten Strömungspfaden (PFP), insbesondere aller parallel zueinander geführten Strömungspfade (PFP), stromabwärts der jeweiligen Aufteilung (SPT) vorsieht.

**3.** Stator (STT) nach einem der vorhergehenden Ansprüche, wobei das Kühlsystem (CLS) derart ausgebildet ist, dass das Kühlmedium (CMD) entlang eines geschlossenen Kreislaufs geführt wird.

**4.** Stator (STT) nach einem der vorhergehenden Ansprüche, wobei der Kern (CRE) mindestens zwei axial nebeneinander angeordnete Körper (PM1, PM2) aufweist, einen ersten Körper (PM1) und einen zweiten Körper (PM2),
wobei der erste Körper (PM1) um einen Axialspalt (AGP) beabstandet von dem zweiten Körper (PMB) angeordnet ist,
wobei in dem Axialspalt (AGP) die Blenden (THR) derart angeordnet sind,
dass das Kühlmedium (CMD) durch die Blenden (THR) in dem Axialspalt (AGP) aus verschiedenen parallel geführten Strömungspfaden (PFP) zusammengeführt wird.

**5.** Stator (STT) nach dem vorhergehenden Anspruch 4, wobei Abstandhalter (DSE) zwischen den Körpern (PMB) vorgesehen sind, die eine axiale Annäherung der Körper (PMB) verhindern,
wobei mindestens einige der Blenden (THR) jeweils als Öffnungen in den Abstandhaltern (DSE) zwischen den Körpern (PMB) vorgesehen sind,
wobei zumindest einige der in dem Körper (PMB) angeordnete Kanäle (CHN) in eine Kavität (CVT) der Abstandhalter (DSE) stromaufwärts der Blenden (THR) münden.

**6.** Stator (STT) nach dem vorhergehenden Anspruch 5, wobei zumindest einige sich axial durch den Kern (CRE) erstreckende Wicklungsstränge gemeinsam mit angrenzenden Oberflächen der jeweiligen Ausnehmungen (RZS) die parallel durchströmte Kanäle (CHN) des Kühlsystems in dem Körper (PMB) definieren, so dass das Kühlmedium (CMD) an dem jeweiligen Wicklungsstrang (WWR) entlang strömt.

**7.** Stator (STT) nach dem vorhergehenden Anspruch 6, wobei die Wicklungsstränge (WWR) sich axial durch den Kern (CRE) den Axialspalt (AGP) überbrückend erstrecken,
wobei der Abstandhalter (DSE) ringförmig ausgebildet ist und jeweils im Bereich des Axialspaltes einen Wicklungsstrang (WWR) umgibt.

**8.** Stator (STT) nach einem der vorhergehenden Ansprüche, wobei axial neben dem Kern (CRE) auf einer ersten Seite ein erster Sammelraum (CCV) stromaufwärts des Kerns (CRE) für das Kühlmedium (CMD) vorgesehen ist und/oder
wobei axial neben dem Kern (CRE) auf einer zweiten Seite ein zweiter Sammelraum (CCV) stromaufwärts des Kerns (CRE) für das Kühlmedium (CMD) vorgesehen ist.

**9.** Stator (STT) nach dem vorhergehenden Anspruch 8, wobei das Wicklungssystem (WDS) Wickelköpfe (WDH) aufweist, wobei mindestens ein Wickelkopf (WDH) in einem Sammelraum (CCV) zumindest teilweise angeordnet ist, wobei zwischen der Zuströmung (INL) und dem Wickelkopf (WDH) eine Trennwand (SWL) in dem Sammelraum (CCV) angeordnet ist.

**10.** Stator (STT) nach dem vorhergehenden Anspruch 9, wobei das Kühlsystem (CLS) derart ausgebildet ist, dass stromaufwärts der Sammelräume (CCV) eine erste Aufteilung (SPT) in mindestens zwei parallel zueinander geführte Strömungspfade (PFP) vorgesehen ist und die Sammelräume (CCV) sich in den parallel geführten Strömungspfaden (PFP) befinden.

**10.** Verfahren zur Herstellung eines Stators (STT) nach einem der vorgehenden Ansprüche umfassend die folgenden Schritte:
a) Erzeugung eines Entwurfs des Stators (STT) umfassend das Kühlsystem (CLS) mit Parametern, die die Durchströmung des Kühlsystems (CLS) mit dem Kühlmedium (CMD) beeinflussen,
b) Festlegung der Ziel-Anteiligkeit (TSR) der Aufteilung (SPT) der Kühlmitteldurchströmung auf parallel durchströmte Kanäle (CHN) durch den Kern (CRE) während des Nennbetriebes,
c) Bestimmen der Blenden-Öffnungen derart, dass die Anteiligkeit der Aufteilung (SPT) der Kühlmitteldurchströmung auf die Kanäle (CHN) während des Nennbetriebes im Wesentlichen der Ziel-Anteiligkeit (TSR) entspricht,
d) Fertigung des Stators (STT) umfassend Blenden (THR), die die ermittelten Blenden-Öffnungen aufweisen.

**11.** Computerimplementiertes Verfahren zur Simulation (SIM) des Betriebs eines Stators (STT) oder eines Verfahrens nach mindestens einem der vorhergehenden Ansprüche.

**12.** Computerprogrammprodukt zur Durchführung eines Verfahrens nach Anspruch 11 mittels mindestens eines Computers (CMP).
